# EUROPÄISCHE PATENTSCHRIFT

(11) **EP 3 157 192 B1**
(45) Veröffentlichungstag und Bekanntmachung des Hinweises auf die Patenterteilung: **06.11.2019**
(21) Anmeldenummer: 16188239.4
(22) Anmeldetag: 12.09.2016
(51) Int. Cl.: H04L 9/08, H04L 9/32, H04L 29/06

(54) **VERFAHREN UND SYSTEM FÜR EINE ASYMMETRISCHE SCHLÜSSELHERLEITUNG**
METHOD AND SYSTEM FOR ASYMMETRIC KEY DERIVISION
PROCÉDÉ ET SYSTÈME DE DÉDUCTION DE CODE ASYMÉTRIQUE

(30) Priorität: 16.10.2015 DE 102015220227
(43) Veröffentlichungstag der Anmeldung: 19.04.2017
(73) Patentinhaber: Volkswagen Aktiengesellschaft, 38440 Wolfsburg (DE)
(72) Erfinder: Tschache, Alexander, 38436 Wolfsburg (DE); Winkelvos, Timo, 38104 Braunschweig (DE)

(56) Entgegenhaltungen:
- EP-A1- 1 443 795
- DE-A1-102008 018 001
- "Chapter 13: Key Management Techniques ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 543 - 590 , 1. Oktober 1996 (1996-10-01), XP001525013, ISBN: 978-0-8493-8523-0 Gefunden im Internet: URL:http://www.cacr.math.uwaterloo.ca/hac/

## Beschreibung

Die Erfindung betrifft ein Verfahren und ein System für eine asymmetrische Schlüsselherleitung.

Der normale Vorgang einer asymmetrischen Schlüsselsignierung ist, dass ein Endgerät ein asymmetrisches Schlüsselpaar erzeugt und den dabei entstehenden öffentlichen Schlüssel an eine Signierinstanz überträgt. Dort wird der öffentliche Schlüssel mit dem privaten Schlüssel von der Signierinstanz signiert und an das Endgerät zurück gesendet. Dann kann das Endgerät den signierten öffentlichen Schlüssel zusammen mit seinem privaten Schlüssel zur Kommunikation benutzen. Andere Kommunikationspartner können die Signatur von der Signierinstanz unter dem signierten öffentlichen Schlüssel prüfen.

Üblicherweise benötigt ein derartiger Signiervorgang zwei Kommunikationsvorgänge. Einen zur Übertragung des öffentlichen Schlüssels an die Signierinstanz und einen zur Übertragung des signierten öffentlichen Schlüssels zurück an das Endgerät. Dies kann bei der Bedatung von Endgeräten, bei denen eine bilaterale Kommunikation nicht möglich ist, wie zum Beispiel Fahrzeugen, problematisch sein. So würde dies zum Beispiel eine Vorberechnung von Bedatungsinhalten für die Produktion von Fahrzeugen ausschließen.

Eine andere Lösung ist es, sowohl den privaten Schlüssel als auch den öffentlichen Schlüssel durch die Signierinstanz erzeugen zu lassen. Somit wird nur eine Kommunikation benötigt, um den öffentlichen Schlüssel und den privaten Schlüssel an das Endgerät zu übertragen. Hierbei ist jedoch kritisch, dass der eigentlich geheime Schlüssel über potentiell unsichere Kanäle übertragen werden muss. Weiterhin wird Speicheraufwand bei der Signierinstanz erzeugt.

DE 103 36 148 A1 offenbart ein Verfahren zum Signieren einer Datenmenge in einem Public-Key-System, bei dem eine Datenmenge durch zwei berechtigte Personen zweifach signiert wird.

DE 10 2014 208 385 A1 offenbart ein Verfahren zum Laden mehrerer Softwareobjekte von einer Programmierquelle, wobei unterschiedliche Signaturen der Programmierquelle auch ohne Zertifikat des öffentlichen Schlüssels verarbeitet werden.

EP 1 443 795 A1 offenbart ein Verfahren zum Erzeugen eines asymmetrischen Schlüsseln in einem Telekommunikationssystem und in der Literatur Menezes A J et al. - Key Mana. Tech. ist eine Zertifikatsverteilung und Aufhebung eines Zertifikatverzeichnisses beschrieben.

DE 10 2008 018 001 A1 betrifft ein Verfahren zur Übertragung einer Nachricht zwischen Teilnehmern in einem geschlossenen Netz eines Fahrzeugs.

DE 60 2004 000 695 T2 betrifft ein Verfahren zum Erzeugen eines Schlüsselpaars in einem Telekommunikationssystem mit einem Benutzerendgerät und einem Netzknoten.

Der Erfindung liegt nun die Aufgabe zugrunde, das Einbringen von signierten asymmetrischen Schlüsseln in ein Endgerät zu verbessern.

Diese Aufgabe wird gelöst durch ein Verfahren gemäß Anspruch 1 beziehungsweise einem System gemäß Anspruch 6.

Das erfindungsgemäße Verfahren für eine asymmetrische Schlüsselherleitung durch eine Signierinstanz für ein Endgerät, welches ein Steuergerät für ein Fahrzeug ist, umfasst die Schritte:
- Einbringen von identischem kryptographischen Material in die Signierinstanz und in das Endgerät in einer gesicherten Umgebung eines Herstellers des Fahrzeugs, wobei das kryptographische Material ein gemeinsames Geheimnis oder ein symmetrischer Schlüssel ist;
- Ableiten jeweils eines privaten Schlüssels aus dem kryptographischen Material in der Signierinstanz und in dem Endgerät;
- Berechnen jeweils eines öffentlichen Schlüssels aus dem privaten Schlüssel in der Signierinstanz und in dem Endgerät;
- Erzeugen einer Signatur oder eines signierten öffentlichen Schlüssels in der Signierinstanz;
- Übertragen der Signatur oder des signierten öffentlichen Schlüssels von der Signierinstanz in das Endgerät; und
- Anhängen der Signatur der Signierinstanz oder einer aus dem signierten öffentlichen Schlüssel der Signierinstanz an den öffentlichen Schlüssel des Endgeräts in dem Endgerät, um einen signierten öffentlichen Schlüssel des Endgeräts zu erzeugen. Dabei ist das Endgerät durch einen Zulieferer des Endgeräts mit einem vorläufigen kryptographischen Material versehen, um die Einbringung der Signatur in das Endgerät mittels des vorläufigen kryptographischen Materials zu schützen. Das vorläufige kryptographische Material wird ungültig, wenn die Signatur in das Endgerät eingebracht wird

Das erfindungsgemäße Verfahren hat den Vorteil, dass die Signierinstanz den sicherheitskritischen privaten Schlüssel nicht an das Endgerät übertragen muss. Stattdessen ist lediglich die einmalige Übertragung der sicherheitsunkritischen Signatur und/oder des signierten öffentlichen Schlüssels von der Signierinstanz in das Endgerät erforderlich. Die Signierinstanz muss weiterhin den privaten Schlüssel und den öffentlichen Schlüssel nicht vorhalten, solange das kryptographische Material gespeichert bleibt, was Speicherplatz spart. Zudem muss das Endgerät den privaten oder öffentlichen Schlüssel nicht speichern, sondern kann ihn bei Bedarf aus dem gespeicherten kryptographischem Material berechnen. Weiterhin kann es von Vorteil sein, eine bereits bestehende Infrastruktur für symmetrische Geheimnisse nun auch für eine asymmetrische Verschlüsselung nutzen zu können.

Ebenfalls von Vorteil ist, dass nur eine unidirektionale Kommunikation in das Endgerät hinein nötig ist. Es gibt Endgeräte, die gar nicht oder zumindest nicht in einem frühen Stadium eines Produktionsprozesses, wie zum Beispiel bei einem Fahrzeug verlässlich nach außen kommunizieren können. Es ist bereits ausreichend, lediglich die Signatur von der Signierinstanz an das Endgerät zu übertragen, anstatt den signierten öffentlichen Schlüssel zu übertragen, da dieser ebenfalls in dem Endgerät berechnet wird. Anderenfalls beinhaltet der signierte öffentliche Schlüssel die Signatur der Signierinstanz. Ein weiterer Vorteil ist, dass das Signieren zu jedem Zeitpunkt nach dem Einbringen des kryptografischen Materials erfolgen kann, was ein zeitliche Unabhängigkeit ermöglicht. Das Einbringen in das Endgerät kann an einer anderen opportunen Stelle, wie zum Beispiel bei einem Zulieferer eines Steuergeräts, erfolgen.

Das erfindungsgemäße Verfahren für eine asymmetrische Schlüsselherleitung kann auch derart angesehen werden, dass die Schlüsseleinbringung durch Übertragen der Signatur und/oder des signierten öffentlichen Schlüssels in das Endgerät inkludiert ist. Nach dem Übertragen und der Berechnung eines signierten öffentlichen Schlüssels in dem Endgerät kann dieses nun an einer authentisierbaren Kommunikation in einer Public-Key-Infrastruktur (PKI) teilnehmen.

Das kryptographische Material ist ein gemeinsames Geheimnis oder ein symmetrischer Schlüssel. Beide Varianten können einfach realisiert werden und haben nur geringe Anforderungen an die Signierinstanz und das Endgerät.

Das kryptographische Material kann eine Bitfolge sein. Diese Bitfolge oder der Bitstring kann eine beliebige Länge aufweisen und erlaubt damit eine hohe Flexibilität.

Der private Schlüssel (30a, 30b) kann eine Zufallszahl sein. Dabei wird auf Basis des kryptografischen Materials eine deterministische Pseudozufallszahl erzeugt. Hierfür wird eine deterministische, kryptografische Pseudozufallsfunktion benötigt, die zum Beispiel mit einer AES (Advanced Encryption Standard) Funktion leicht entwickelt werden kann. Diese Pseudozufallszahl kann dann auf verschiedene Arten verwendet werden. Entweder direkt als ECC private key oder auf Umwegen als RSA-Schlüssel. Für RSA muss ebenfalls deterministisch ein RSA-Schlüsselpaar hergeleitet werden, das heißt es müssen große Primzahlen erzeugt werden. Hierfür gibt es Primzahlengeneratoren, die Zufallszahlen als Initialwert verwenden und dann mit entsprechendem Rechenaufwand Primzahlen liefern. Der Vorgang bleibt damit deterministisch. Wenn ausreichend Rechenleistung zur Verfügung steht, kann auch ein RSA Verfahren verwendet werden.

Der öffentliche Schlüssel kann durch ein Diffie-Hellman oder ein Elliptic Curve Diffie-Hellman Verfahren berechnet werden. Der öffentliche Schlüssel wird immer aus den geheimen Parametern erzeugt, was bedeutet dass der private Schlüssel zuerst berechnet wird. Dies gilt insbesondere für ECC und Diffie-Hellman Verfahren. Bei RSA Verfahren erzeugt man zuerst die geheimen Parameter und errechnet aus diesen dann den öffentlichen und privaten Schlüssel. Hierbei wählt man den öffentlichen Schlüssel und errechnet daraus den privaten Schlüssel. Diese Verfahren lassen sich leicht implementieren und arbeiten effizient.

Der private Schlüssel kann durch eine kryptografische Pseudozufallsfunktion, wie eine Hashfunktion, berechnet werden. Der private Schlüssel wird aus dem kryptographischen Material kryptografisch sicher abgeleitet. Der bei einer Hashfunktion entstehende Hashwert, auch Fingerprint oder Fingerabdruck genannt, erlaubt ein sicheres und effizientes Verfahren.

Die gesicherte Umgebung kann einen Produktionsort und/oder ein Backend des Herstellers umfassen. Der Begriff gesicherte Umgebung kann sicherheitstechnisch ausgelegt werden und nicht ausschließlich geographisch. Zum Beispiel kann in einem Backend beziehungsweise in einer Recheneinheit oder IT-Struktur unter sicheren Verhältnissen das kryptographische Material erstellt und eingebracht werden.

Es ist weiter vorgesehen, dass ein Zulieferer des Endgeräts dieses mit einem vorläufigen kryptographischen Material versieht und dass das vorläufige kryptographische Material ungültig wird, wenn die Signatur in das Endgerät eingebracht wird. Das vorläufige kryptographische Material wird bei oder nach der Herstellung im Endgerät hinterlegt und erweitert somit den Sicherheitsbereich auf Komponenten, bevor sie in ein Gesamtgerät, in welches das Endgerät verbaut wird, eingebaut werden. Dadurch wird die Sicherheit weiter erhöht. Das vorläufige kryptographische Material kann auch gelöscht werden. Das Ungültigmachen beziehungsweise das Löschen des vorläufigen kryptographischen Materials wird im gleichen Schritt wie die Einbringung der Signatur vorgenommen. Die Einbringung der Signatur wird basierend auf dem vorläufigen Material geschützt.

Das erfindungsgemäße System für eine asymmetrische Schlüsselherleitung mit einer Signierinstanz und einem Endgerät sieht vor, dass die Signierinstanz und das Endgerät eingerichtet sind, ein wie zuvor beschriebenes Verfahren auszuführen. Es gelten die gleichen Vorteile und Modifikationen wie zuvor beschrieben.

Erfindungsgemäß ist das Endgerät ein Steuergerät für ein Fahrzeug. Die Struktur eines typischen Steuergeräts für ein Fahrzeug und die Infrastruktur beziehungsweise das System eines Fahrzeugherstellers mit zentralem Backend und einer Vielzahl von Fahrzeugen bietet sich besonders für das Verfahren beziehungsweise System gemäß Ausführungsbeispielen der Erfindung an.

Die Signierinstanz kann in einem Backend eines Fahrzeugherstellers angeordnet sein. In dieser zentralen Einrichtung stehen alle benötigten Komponenten wie Rechner, Datenbank, Netzwerk und Sicherheitskomponenten zur Verfügung beziehungsweise können einfach und sicher verfügbar gemacht werden. Zudem werden im Backend beziehungsweise in der Produktion, jedoch ausgehend vom Backend, bereits Bedatungsprozesse ausgeführt, was eine Integration der vorgeschlagenen asymmetrischen Schlüsselherleitung erleichtert.

Die Signierinstanz kann verteilt angeordnet sein. Die Signierinstanz kann sich über mehrere Systeme erstrecken, zum Beispiel mit einer Instanz, die das kryptographische Material vorhält und auf Anfrage nur den öffentlichen Schlüssel zurückgibt, und einer anderen Instanz, welche dann signiert. Zwar erleichtert eine zusammengefasste Instanz den Datenfluss, da mehrere Instanzen geschützt kommunizieren müssen, jedoch kann eine verteilte Signierinstanz Vorteile wie Ausfallsicherheit oder einen Sicherheitsgewinn durch die Aufgabenteilung und das damit verbundene need-to-know Prinzip, das heißt Kenntnis nur bei Bedarf, haben.

Es können mehrere Endgeräte vorgesehen und eine Datenbank vorgesehen sein, in der das kryptographische Material den Endgeräten zugeordnet ist. Das kryptographische Material, zum Beispiel ein symmetrischer Schlüssel, kann naturgemäß nur für ein einziges Endgerät, wie ein Fahrzeug oder Steuergerät, verwendet werden. Öffentliche und private Schlüssel müssen nicht gespeichert werden, da sie aus dem kryptographischen Material jederzeit wieder abgeleitet werden können. Die Datenbank kann in der Signierinstanz enthalten oder mit ihr verbunden sein.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines Systems für eine asymmetrische Schlüsselherleitung mit einer Signierinstanz und mehreren Endgeräten; und
- Figur 2: eine schematische Darstellung einer asymmetrische Schlüsselherleitung mit einer Signierinstanz und einem Endgerät.

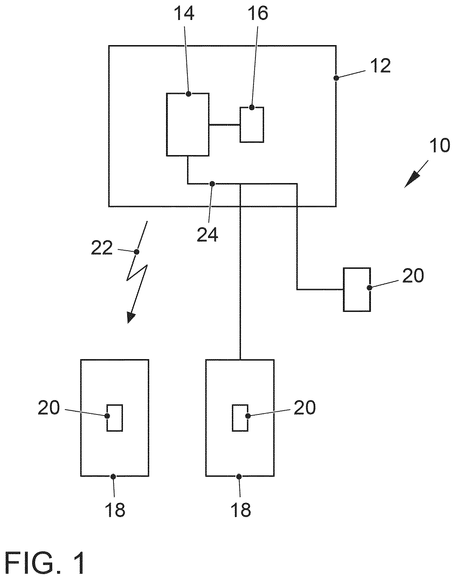

Figur 1 zeigt ein Ausführungsbeispiel eines Systems 10 für eine asymmetrische Schlüsselherleitung. Hier ist das Beispiel eines Fahrzeugherstellers gewählt. In einem Backend 12 des Fahrzeugherstellers ist eine Signierinstanz 14 und eine Datenbank 16 angeordnet. Das Backend 12, die Signierinstanz 14 und die Datenbank 16 sind als dedizierte Einheiten dargestellt. Es ist möglich, alle oder mehrere Elemente zum Beispiel in einem Server zusammenzufassen. Die Signierinstanz 14 kann vollständig oder teilweise als Software ausgeführt sein.

In Fahrzeugen 18 des Fahrzeugherstellers ist jeweils ein Endgerät 20, zum Beispiel in Form eines Steuergeräts oder einer anderen Rechenvorrichtung, angeordnet. Zumindest die Endgeräte 20 gehören zu dem System 10.

Das Backend 12 beziehungsweise die Signierinstanz 14 kommuniziert mit den Endgeräten 20. Dies kann über eine drahtlose Verbindung 22, wie zum Beispiel ein WLAN oder Mobilfunknetz, beziehungsweise über eine drahtgebundene Verbindung 24, wie zum Beispiel ein Kabel oder Ethernet, realisiert sein. Es ist zwischen zwei Arten der Verbindung zu unterscheiden. Die erste Art, die hier im Wesentlichen betrachtet wird, ist in einer gesicherten Umgebung des Herstellers realisiert. Dies kann zum Beispiel bei der Produktion des Fahrzeugs 20 innerhalb eines Werks der Fall sein. Die zweite Art der Verbindung ist eine Verbindung außerhalb einer gesicherten Umgebung des Herstellers. Dies ist zum Beispiel der Fall bei bereits verkauften oder im Fahrbetrieb befindlichen Fahrzeugen. Diese Fahrzeuge können zum Beispiel über ein Mobilfunknetz oder in einer Werkstatt über das Internet mit dem Backend 12 kommunizieren. Dies sind tendenziell unsichere Verbindungen, was für eine asymmetrische Schlüsselherleitung eher nachteilig ist. Jedoch kann auch diese zweite Art der Verbindung für die hier vorgestellte asymmetrische Schlüsselherleitung und Schlüsseleinbringung genutzt werden, wenn die Kommunikation geschützt ist. Im Folgenden wird auf die erste Art der Verbindung innerhalb einer gesicherten Umgebung des Herstellers eingegangen.

Schließlich ist es möglich, dass ein Endgerät 20 direkt mit dem Backend 12 beziehungsweise mit der Signierinstanz 14 kommuniziert. Dies kann zum Beispiel bei der Produktion des Endgeräts 20 oder des Fahrzeugs 18 beziehungsweise bei einem Austausch des Endgeräts 20 der Fall sein. Diese Kommunikation wird dann üblicherweise über die drahtgebundene Verbindung 24 stattfinden, kann aber auch über die drahtlose Verbindung 22 realisiert sein.

In der Datenbank 16 ist vorgesehen, dass den Endgeräten 20 beziehungsweise den Fahrzeugen 18 Informationen wie unter anderem zu dem verwendeten kryptographischen Material zugeordnet sind.

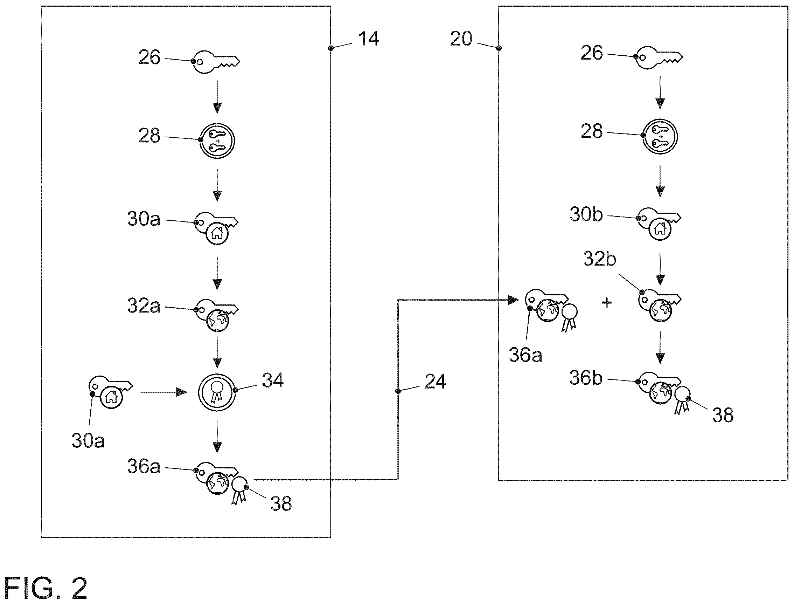

Anhand von Figur 2 wird nun ein Verfahren einer asymmetrischen Schlüsselherleitung mit einer Signierinstanz 14 und einem Endgerät 20 beschrieben. Hier fällt exemplarisch die Datenbank 16 der kryptografischen Materialien mit der Signierinstanz 14 zusammen. Zunächst wird identisches kryptographisches Material 26 in die Signierinstanz 14 und in das Endgerät 20 eingebracht. Bei dem kryptographischen Material 26 handelt es sich um eine gemeinsames Geheimnis oder einen symmetrischen Schlüssel. Bei der Produktion des Fahrzeugs 18, in welchem das Endgerät 20 verbaut ist oder wird, oder bei der Produktion des Endgeräts 20, das heißt vor der Produktion des Fahrzeugs, wird das kryptographische Material 26 in gesicherter Umgebung beziehungsweise über einen gesicherten Übertragungsweg in das Endgerät 20 eingebracht. Der Begriff Einbringen umfasst auch die Erstellung des kryptographischen Materials 26 in der Signierinstanz 14 und das dann darauffolgende Einbringen in das Endgerät 20. Das Einbringen kann zum Beispiel über die Verbindung 24 realisiert sein. Diese Verbindung 24 kann unidirektional von der Signierinstanz 14 zu dem Endgerät 20 ausgestaltet und physikalisch in der Produktionsstätte angeordnet sein.

Anschließend erfolgt das Ableiten oder die Schlüsselableitung 28 jeweils eines privaten Schlüssels aus dem kryptographischen Material 26 sowohl in der Signierinstanz 14 als auch in dem Endgerät 20. Dabei wird in der Signierinstanz 14 ein privater Schlüssel 30a und in dem Endgerät 20 ein privater Schlüssel 30b erzeugt. Die beiden privaten Schlüssel 30a und 30b sind naturgemäß identisch.

Aus diesem privaten Schlüssel 30a wird in der Signierinstanz 14 ein öffentlicher Schlüssel 32a berechnet. Entsprechend wird in dem Endgerät 20 ein öffentlicher Schlüssel 32b aus dem privaten Schlüssel 30b berechnet. Die beiden öffentlichen Schlüssel 32a und 32b sind naturgemäß identisch.

Bei der nun in der Signierinstanz 14 erfolgenden Signierung 34 wird mit dem privaten Schlüssel 30a der Signierinstanz 14 der öffentliche Schlüssel 32a der Signierinstanz 14 signiert. Dabei wird ein signierter öffentlicher Schlüssel 36a beziehungsweise eine Signatur 38 berechnet oder erzeugt. Die Signatur 38 repräsentiert die Urheberschaft und Integrität des öffentlichen Schlüssel 32a beziehungsweise des signierten öffentlichen Schlüssels 36a. Die Signatur 38 ist dann von einem Dritten mit dem öffentlichen Schlüssel verifizierbar, der zu dem privaten Schlüssel 30a gehört.

Der signierte öffentliche Schlüssel 36a beziehungsweise die Signatur 38, die von der Signierinstanz 14 erzeugt worden sind, werden an das Endgerät 20 übertragen. Dies kann zum Beispiel über die Verbindung 24 realisiert sein. Kryptographisch gesehen gehört der signierte öffentliche Schlüssel 36a zu dem Endgerät 20. Er wurde gewissermaßen stellvertretend von der Signierinstanz 14 für das Endgerät 20 erzeugt.

In dem Endgerät 20 wird die Signatur 38 der Signierinstanz 14 an den öffentlicher Schlüssel 32b des Endgeräts 20 angehängt oder beigefügt, so dass ein signierter öffentlicher Schlüssel 36b des Endgeräts 20 erzeugt wird. Mit diesem signierten öffentlichen Schlüssel 36b kann das Endgerät 20 nun an einer authentisierbaren Kommunikation in einer Public-Key-Infrastruktur (PKI) teilnehmen.

Die Signatur 38 kann direkt angehängt werden, wenn lediglich die Signatur 38 von der Signierinstanz 14 an das Endgerät 20 übertragen wurde, oder die Signatur 38 wird zunächst aus dem signierten öffentlichen Schlüssel 36a der Signierinstanz 14 extrahiert, wenn dieser von der Signierinstanz 14 an das Endgerät 20 übertragen wurde. Alternativ kann man auch den signierten öffentlichen Schlüssel 36a übertragen. Das ist insbesondere dann sinnvoll, falls der signierte öffentliche Schlüssel 36a in ein Zertifikat eingebettet ist, das nicht einfach vom Endgerät rekonstruiert werden kann.

Die in den beiden Einheiten Signierinstanz 14 und Endgerät 20 hier parallel geschilderten Abläufe müssen nicht parallel ausgeführt werden, sondern können weitgehend unabhängig voneinander ablaufen. Der Startpunkt ist stets das Vorhandensein des kryptographischen Materials 26. Das Endgerät benötigt zur Erstellung des signierten öffentlichen Schlüssels 36b die Signatur 38 und/oder den signierten öffentlichen Schlüssel 36a von der Signierinstanz 14. Nach erfolgreichem Ablauf des Verfahrens sind der signierte öffentliche Schlüssel 36b des Endgeräts 20 und der von der Signierinstanz 14 erzeugte signierte öffentliche Schlüssel 36a identisch. Dies ist der Fall, weil beide Instanzen, das heißt die Signierinstanz 14 und das Endgerät 20 von dem identischen Geheimnis 26 starten. Für den Fall, das ein Endgerät nicht von dem Geheimnis 26 startet, funktioniert in diesem Fall die Erzeugung eines signierten öffentlichen Schlüssels in dem Endgerät nicht.

Es zeigt sich, dass nur eine unidirektionale Kommunikation in das Endgerät hinein nötig ist und trotzdem die volle Sicherheit gewährleistet ist.

### Bezugszeichenliste

- 10: System
- 12: Backend
- 14: Signierinstanz
- 16: Datenbank
- 18: Fahrzeug
- 20: Steuergerät
- 22: drahtlose Verbindung
- 24: drahtgebundene Verbindung
- 26: kryptographisches Material
- 28: Schlüsselableitung
- 30a: privater Schlüssel
- 30b: privater Schlüssel
- 32a: öffentlicher Schlüssel
- 32b: öffentlicher Schlüssel
- 34: Signierung
- 36a: signierter öffentlicher Schlüssel
- 36b: signierter öffentlicher Schlüssel
- 38: Signatur

## Patentansprüche

1. Verfahren zu einer asymmetrischen Schlüsselherleitung durch eine Signierinstanz (14) für ein Endgerät (20), welches ein Steuergerät für ein Fahrzeug (18) ist, mit den Schritten:
- Einbringen von identischem kryptographischen Material (26) in die Signierinstanz (14) und in das Endgerät (20) in einer gesicherten Umgebung (12) eines Herstellers des Fahrzeugs (18), wobei das kryptographische Material (26) ein gemeinsames Geheimnis oder ein symmetrischer Schlüssel ist;
- Ableiten jeweils eines privaten Schlüssels (30a, 30b) aus dem kryptographischen Material (26) in der Signierinstanz (14) und in dem Endgerät (20);
- Berechnen jeweils eines öffentlichen Schlüssels (32a, 32b) aus dem privaten Schlüssel (30a, 30b) in der Signierinstanz (14) und in dem Endgerät (20);
- Erzeugen einer Signatur (38) oder eines signierten öffentlichen Schlüssels (36a) in der Signierinstanz (14);
- Übertragen der Signatur (38) oder des signierten öffentlichen Schlüssels (36a) von der Signierinstanz (14) in das Endgerät (20); und
- Anhängen der Signatur (38) der Signierinstanz (14) oder einer aus dem signierten öffentlichen Schlüssel (36a) der Signierinstanz (14) extrahierten Signatur (38) an den öffentlichen Schlüssel (32b) des Endgeräts (20) in dem Endgerät (20), um einen signierten öffentlichen Schlüssel (36b) des Endgeräts (20) zu erzeugen,
wobei das Endgerät (20) durch einen Zulieferer des Endgeräts (20) mit einem vorläufigen kryptographischen Material versehen ist, um die Einbringung der Signatur (38) in das Endgerät (20) mittels des vorläufigen kryptographischen Materials zu schützen, wobei das vorläufige kryptographische Material ungültig wird, wenn die Signatur (38) in das Endgerät (20) eingebracht wird.

2. Verfahren nach Anspruch 1, **dadurch gekennzeichnet, dass** das kryptographische Material (26) eine Bitfolge ist.

3. Verfahren nach einem der vorhergehenden Ansprüche, **dadurch gekennzeichnet, dass** der private Schlüssel (30a, 30b) eine Zufallszahl ist.

4. Verfahren nach einem der vorhergehenden Ansprüche, **dadurch gekennzeichnet, dass** der öffentliche Schlüssel (32a, 32b) durch ein Diffie-Hellman, ein Elliptic Curve Diffie-Hellman Verfahren oder ein RSA-Verfahren berechnet wird.

5. Verfahren nach einem der vorhergehenden Ansprüche, **dadurch gekennzeichnet, dass** der private Schlüssel (30a, 30b) durch eine kryptografische Pseudozufallsfunktion berechnet wird.

6. System für eine asymmetrische Schlüsselherleitung mit einer Signierinstanz (14) und einem Endgerät (20),wobei das Endgerät (20) ein Steuergerät für ein Fahrzeug (18) ist, **dadurch gekennzeichnet, dass** die Signierinstanz (14) und das Endgerät (20) eingerichtet sind, ein Verfahren nach einem der Ansprüche 1 bis 5 auszuführen.

7. System nach Anspruch 6, **dadurch gekennzeichnet, dass** die Signierinstanz (14) in einem Backend (12) eines Fahrzeugherstellers angeordnet ist.

8. System nach Anspruch 7, **dadurch gekennzeichnet, dass** die Signierinstanz verteilt angeordnet ist.

9. System nach einem der Ansprüche 6 bis 8, **dadurch gekennzeichnet, dass** mehrere Endgeräte (18) vorgesehen sind und dass eine Datenbank (16) vorgesehen ist, in der das kryptographische Material (26) den Endgeräten (20) zugeordnet ist.

## Claims

1. A method for an asymmetric key derivation by a signing entity (14) for a terminal device (20), which is a control device for a vehicle (18), having the steps:
- Introduction of identical cryptographic material (26) into the signing entity (14) and into the terminal device (20) in a secured environment (12) of a manufacturer of the vehicle (18), wherein the cryptographic material (26) is a common secret or a symmetric key;
- derivation in each case of a private key (30a, 30b) from the cryptographic material (26) in the signing entity (14) and in the terminal device (20);
- calculation in each case of a public key (32a, 32b) from the private key (30a, 30b) in the signing entity (14) and in the terminal device (20);
- generation of a signature (38) or a signed public key (36a) in the signing entity (14);
- transmission of the signature (38) or of the signed public key (36a) by the signing entity (14) into the terminal device (20); and
- attachment of the signature (38) of the signature entity (14) or a signature (38) extracted from the signed public key (36a) of the signing entity (14) to the public key (32b) of the terminal device (20) in the terminal device (20), in order to generate a signed public key (36b) of the terminal device (20),
wherein the terminal device (20) is provided by a supplier of the terminal device (20) with a preliminary cryptographic material, in order to protect the introduction of the signature (38) into the terminal device (20) by means of the preliminary cryptographic material, wherein the preliminary cryptographic material is invalid, if the signature (38) is introduced into the terminal device (20).

2. The method according to Claim 1, **characterized in that** the cryptographic material (26) is a bit string.

3. The method according to any one of the preceding claims, **characterized in that** the private key (30a, 30b) is a random number.

4. The method according to any one of the preceding claims, **characterized in that** the public key (32a, 32b) is calculated by a Diffie-Hellman, an Elliptic Curve Diffie-Hellman method or a RSA method.

5. The method according to any one of the preceding claims, **characterized in that** the private key (30a, 30b) is calculated by a cryptographic pseudo-random function.

6. The system for an asymmetric key derivation with a signing entity (14) and a terminal device (20), wherein the terminal device (20) is a control device for a vehicle (18), **characterized in that** the signing entity (14) and the terminal device (20) are configured to carry out a method according to any one of Claims 1 to 5.

7. The system according to Claim 6, **characterized in that** the signing entity (14) is arranged in a backend (12) of a vehicle manufacturer.

8. The system according to Claim 7, **characterized in that** the signing entity is arranged distributed.

9. The system according to any one of Claims 6 to 8, **characterized in that** several terminal devices (18) are provided and that a database (16) is provided, in which the cryptographic material (26) is assigned to the terminal devices (20).

## Revendications

1. Procédé de déduction de code asymétrique par une instance de signature (14) pour un terminal (20) qui est un appareil de commande pour un véhicule (18), avec les étapes:
- introduction de matériel cryptographique (26) identique dans l'instance de signature (14) et dans le terminal (20) dans un environnement sécurisé (12) d'un constructeur du véhicule (18), dans lequel le matériel cryptographique (26) est un secret commun ou un code symétrique ;
- dérivation respectivement d'un code privé (30a, 30b) à partir du matériel cryptographique (26) dans l'instance de signature (14) et dans le terminal (20) ;
- calcul respectivement d'un code public (32a, 32b) à partir du code privé (30a, 30b) dans l'instance de signature (14) et dans le terminal (20) ;
- production d'une signature (38) d'un code public signé (36a) dans l'instance de signature (14) ;
- transmission de la signature (38) ou du code public signé (36a) à partir de l'instance de signature (14) vers le terminal (20) ; et
- adjonction de la signature (38) de l'instance de signature (14) ou d'une signature (38) extraite du code public signé (36a) de l'instance de signature (14) au code public (32b) du terminal (20) dans le terminal (20) pour produire un code public signé (36b) du terminal (20),
dans lequel le terminal (20) est muni, par un fournisseur du terminal (20), d'un matériel cryptographique provisoire pour protéger l'introduction de la signature (38) dans le terminal (20) au moyen du matériel cryptographique provisoire, dans lequel le matériel cryptographique provisoire est invalidé quand la signature (38) est introduite dans le terminal (20).

2. Procédé selon la revendication 1, **caractérisé en ce que** le matériel cryptographique (26) est une chaîne binaire.

3. Procédé selon l'une des revendications précédentes, **caractérisé en ce que** le code privé (30a, 30b) est un nombre aléatoire.

4. Procédé selon l'une des revendications précédentes, **caractérisé en ce que** le code public (32a, 32b) est calculé par un procédé Diffie-Hellman, un procédé Elliptic Curve Diffie-Hellman ou un procédé RSA.

5. Procédé selon l'une des revendications précédentes, **caractérisé en ce que** le code privé (30a, 30b) est calculé par une fonction pseudo-aléatoire cryptographique.

6. Système pour une déduction de code asymétrique avec une instance de signature (14) et avec un terminal (20), dans lequel le terminal (20) est un appareil de commande pour un véhicule (18), **caractérisé en ce que** l'instance de signature (14) et le terminal (20) sont agencés pour réaliser un procédé selon l'une des revendications 1 à 5.

7. Système selon la revendication 6, **caractérisé en ce que** l'instance de signature (14) est disposée dans un back-end (12) d'un constructeur automobile.

8. Système selon la revendication 7, **caractérisé en ce que** l'instance de signature est disposée de façon répartie.

9. Système selon l'une des revendications 6 à 8, **caractérisé en ce que** plusieurs terminaux (18) sont prévus et **en ce qu'**il est prévu une base de données (16) dans laquelle le matériel cryptographique (26) est affecté aux terminaux (20) .
